# EUROPÄISCHE PATENTSCHRIFT

(11) **EP 2 640 588 B1**
(45) Veröffentlichungstag und Bekanntmachung des Hinweises auf die Patenterteilung: **20.12.2017**
(21) Anmeldenummer: 11770737.2
(22) Anmeldetag: 12.10.2011
(51) Int. Cl.: B60K 1/00, H01M 2/10

(54) **ELEKTRISCH ANGETRIEBENE ACHSE EINES ZWEISPURIGEN FAHRZEUGS**
ELECTRICALLY DRIVEN AXLE OF A TWO-TRACK VEHICLE
ESSIEU À ENTRAÎNEMENT ÉLECTRIQUE D'UN VÉHICULE À DOUBLE VOIE

(30) Priorität: 15.11.2010 DE 102010043901
(43) Veröffentlichungstag der Anmeldung: 25.09.2013
(73) Patentinhaber: Bayerische Motoren Werke Aktiengesellschaft, 80809 München (DE)
(72) Erfinder: LANGER, Juergen, 82291 Mammendorf (DE); LORENZ, Tobias, 85391 Allershausen (DE)
(86) Internationale Anmeldenummer: PCT/EP2011/067760
(87) Internationale Veröffentlichungsnummer: WO 2012/065787

(56) Entgegenhaltungen:
- DE-A1- 4 243 455
- JP-A- 5 201 354
- Peugeot: "Peugeot 3008 Hybrid 4 (2013)", , 2. März 2010 (2010-03-02), XP002672228, Gefunden im Internet: URL:http://peugeot.3008.free.fr/FR/PEUGEOT _3008_HYBRID4_2013/index.php [gefunden am 2012-03-23]

## Beschreibung

Die Erfindung betrifft eine elektrisch angetriebene Achse eines zweispurigen Fahrzeugs mit den Rädern zugeordneten Antriebswellen und einem Achsträger mit mehreren daran befestigten radführenden Lenkern, der weiterhin zumindest einen Elektromotor trägt. Zum Stand der Technik wird beispielshalber auf die DE 44 21 425 C1 und ferner auf die gattungsbildende WO2007/118082 A2 verwiesen.

Zweispurige Fahrzeuge, insbesondere Personenkraftwagen, die entweder alleine oder alternativ zu einer Brennkraftmaschine von einem Elektromotor angetrieben werden, gewinnen zunehmend an Bedeutung. Gesucht sind hierfür einfache Achskonzepte, die nicht nur den Fertigungsprozess des Fahrzeugs vereinfachen, sondern es insbesondere auch in einfacher Weise ermöglichen, einen Fahrzeug-Aufbau wahlweise mit unterschiedlichen Achs-Konzepten zu bestücken, von denen beispielsweise nur eines einen elektrischen Fahrzeug-Antrieb ermöglicht, während ein anderes Achskonzept für ein anderes Antriebsaggregat vorgesehen sein kann.

Hiermit soll nun ein entsprechendes Achs-Konzept für eine elektrisch angetriebene Achse nach dem Oberbegriff des Anspruchs 1 aufgezeigt werden (= Aufgabe der vorliegenden Erfindung).

Die Lösung dieser Aufgabe ist dadurch gekennzeichnet, dass zumindest einer der radführenden Lenker am besagten Grundkörper oder Gehäuse angelenkt ist. Vorteilhafte Aus- und Weiterbildungen sind Inhalt der Unteransprüche.

Erfindungsgemäß ist bzw. sind nicht nur ein Elektromotor - wenn dieser unter Zwischenschaltung eines Verteilergetriebes oder Differentials die Antriebswellen beider Räder antreibt - oder zwei Elektromotoren - falls jedem Fahrzeug-Rad ein eigenständiger Motor zugeordnet ist - am Achsträger befestigt, sondern auch eine sog. Einheit zur Bereitstellung von elektrischer Energie für den oder die genannten Elektromotor(en). Da eine Fahrzeug-Achse üblicherweise eine Vormontage-Einheit darstellt, die im Fertigungsprozess eines Fahrzeugs abseits des Fahrzeug-Aufbaus zunächst komplettiert wird, ehe diese Achse dann mit dem Fahrzeug-Aufbau zusammengefügt wird, können mit einer erfindungsgemäßen Achse die wesentlichen für den elektrischen Antrieb benötigten Elemente nicht nur zusammenhängend vormontiert und in ihrem Zusammenwirken miteinander vor dem Zusammenfügen mit dem Fahrzeug-Aufbau getestet werden, sondern können auch zusammenhängend mit dem weiterhin für sich vorgefertigten Fahrzeug-Aufbau verbunden werden. Dies führt zu einem besonders rationellen Fertigungsprozess. Was die zusammen hängende Vormontage betrifft, so ist insbesondere auch die elektrische Leitungsführung zwischen der genannten Einheit zur Bereitstellung von elektrischer Energie und dem oder den Elektromotor(en) an einer erfindungsgemäßen Achse vormontierbar, so dass beim Zusammenfügen mit dem Fahrzeug-Aufbau keine aufwändige Leitungsinstallation (insbesondere von hohe Stromstärken führenden Leitungen) durchgeführt werden muss.

Die genannte Einheit zur Bereitstellung von elektrischer Energie kann grundsätzlich verschiedenartig aufgebaut sein. Im einfachsten Fall besteht diese Einheit im wesentlichen aus Akkumulatoren zur Speicherung von elektrischer Energie, im komplexesten Fall kann diese Einheit eine Brennstoffzelle mit zugeordneten Akkumulatoren umfassen. Dabei ist die den Akkumulatoren zugeordnete sog. Leistungselektronik ebenfalls Bestandteil der besagten Einheit und falls Elemente zur Temperierung, insbesondere Kühlung der Akkumulatoren und/oder der Leistungselektronik erforderlich sind, so zählen vorzugsweise auch diese Elemente zu den im Anspruch 1 genannten Elementen zur Bereitstellung von elektrischer Energie.

Weiterhin wird vorgeschlagen, die genannten Elemente zur Bereitstellung von elektrischer Energie innerhalb eines Gehäuses und somit durch dieses vor Umgebungseinflüssen geschützt anzuordnen, wobei selbstverständlich nur solche Elemente gemeint sind, bei denen eine solche geschützte Anordnung sinnvoll ist. Beispielsweise zählt ein Wärmetauscher zur Abkühlung eines Wärmeträgermittels durch Umgebungsluft, mit welchem eine Temperierung eines Elements zur Bereitstellung von elektrischer Energie erfolgt, nicht zu diesen genannten Elementen. Dieses genannte Gehäuse ist dabei zumindest an einem geeignet gestalteten, dem Fachmann für Fahrwerkstechnik grundsätzlich bekannten Achsträger befestigt; besonders vorteilhaft ist es jedoch, wenn dieses Gehäuse praktisch ein Bestandteil eines bzw. des Achsträgers ist, an dem in grundsätzlich bekannter Weise die oder einige der radführenden Lenker befestigt sind. Das genannte Gehäuse ist somit strukturell in den Achsträger integriert und kann somit einen sog. Grundkörper des Achsträgers bilden und ist vorteilhafterweise zusätzlich funktional in den Achsträger integriert, indem zumindest einer der radführenden Lenker am besagten Gehäuse bzw. Grundkörper angelenkt ist. Weiterhin können ähnlich den bekannten Achsträgern am besagten Grundkörper sog. Arme (vorzugsweise vier Stück) vorgesehen sein, auf deren Endbereichen der Fahrzeug-Aufbau über Gummilager abgestützt ist.

In besonders vorteilhafter Weise kann das besagte Gehäuse auch zur Reduzierung des Luftwiderstandsbeiwerts des Fahrzeugs beitragen, nämlich wenn der der Fahrbahn zugewandte Unterboden des Achsträgers mit besagtem Gehäuse im wesentlichen eben ausgeführt ist, was mit einer geeigneten Gehäuse-Wand relativ einfach darstellbar ist.

Die beigefügten Figuren zeigen ein Ausführungsbeispiel der vorliegenden Erfindung in perspektivischer Darstellung (Fig.1), in Ansicht von hinten (Fig.2), in Seitenansicht (Fig.3) sowie in Aufsicht von oben (Fig.4), wobei das besagte Gehäuse stark vereinfacht und durchsichtig sowie die darin befindlichen Elemente zur Bereitstellung von elektrischer Energie nur abstrakt dargestellt sind. Auch andere in den Figuren dargestellte Bauelemente sind teilweise durchsichtig dargestellt, um den grundsätzlichen Aufbau besser erkennen zu können.

Mit der Bezugsziffer 1 ist der Radträger des in Fahrtrichtung betrachtet linken Hinter-Rads und mit der Bezugsziffer 2 derjenige des rechten Hinter-Rads eines Personenkraftwagens gekennzeichnet, der mit einer erfindungsgemäßen Achse, vorliegend mit einer erfindungsgemäßen Hinterachse, ausgerüstet ist. An jedem Radträger 1, 2 ist in üblicher Weise ein nicht dargestelltes Rad montiert, für welches im weiteren sowie in den Ansprüchen ebenfalls die Bezugsziffer 1 bzw. 2 verwendet wird. Figürlich dargestellt ist ferner eine mit dem jeweiligen Rad 1, 2 verbundene Bremsscheibe 3. Wie üblich ist jedes Rad 1, 2 durch Lenker geführt, im vorliegendem Ausführungsbeispiel durch fünf Lenker 4, 5, 6, 7, 8. Mit ihrem dem Radträger 1 bzw. 2 abgewandten Ende sind die Lenker 4 - 8 in grundsätzlich bekannter Weise an einem Achsträger 9 angelenkt. Ferner ist vorliegend auf geeignet gestalteten Radträger 1 bzw. 2 ein Feder-Dämpfer-Bein 10 abgestützt, auf dessen oberen Ende der nicht dargestellte Fahrzeug-Aufbau abgestützt ist. Schließlich ist noch ein üblicher Querstabilisator 11 dargestellt.

Der Achsträger 9 ist durch einen als Gehäuse ausgeführten annähernd quaderförmigen Grundkörper 9a gebildet, von welchem annähernd in Eckbereichen (in Fahrtrichtung betrachtet vorne links, vorne rechts hinten links und hinten rechts) Arme 9b abgehen, in deren Enden in bekannter Weise Gummilager 12 vorgesehen sind, über die der Fahrzeug-Aufbau am Achsträger 9 abgestützt ist. Mit diesen Armen, die in den Figuren praktisch durchsichtig dargestellt sind, ist der Achsträger 9 wie grundsätzlich üblich rahmenartig aufgebaut. Der gehäuseartige Aufbau des Grundkörpers 9a verleiht diesem eine hohe mechanische Festigkeit. Insbesondere sind daher neben den genannten vier Armen 9b auch die jedem Rad 1, 2 zugeordneten radführenden Lenker 4 - 8 am Grundkörper 9a bzw. an den Wänden des diesen bildenden Gehäuses befestigt. Hierfür sind an den Wänden des besagten Gehäuses bzw. Grundkörpers 9a Laschen 17 angebracht, bspw. angeschweißt, an denen unter Zwischenschaltung von Gummilagern in üblicher Weise die genannten radführenden Lenker 4 - 8 mit ihrem dem jeweiligen Radträger 1, 2 abgewandten Ende befestigt sind. Der Übersichtlichkeit halber sind dabei in den Figuren nur wenige der Laschen 17 mit Bezugsziffern versehen.

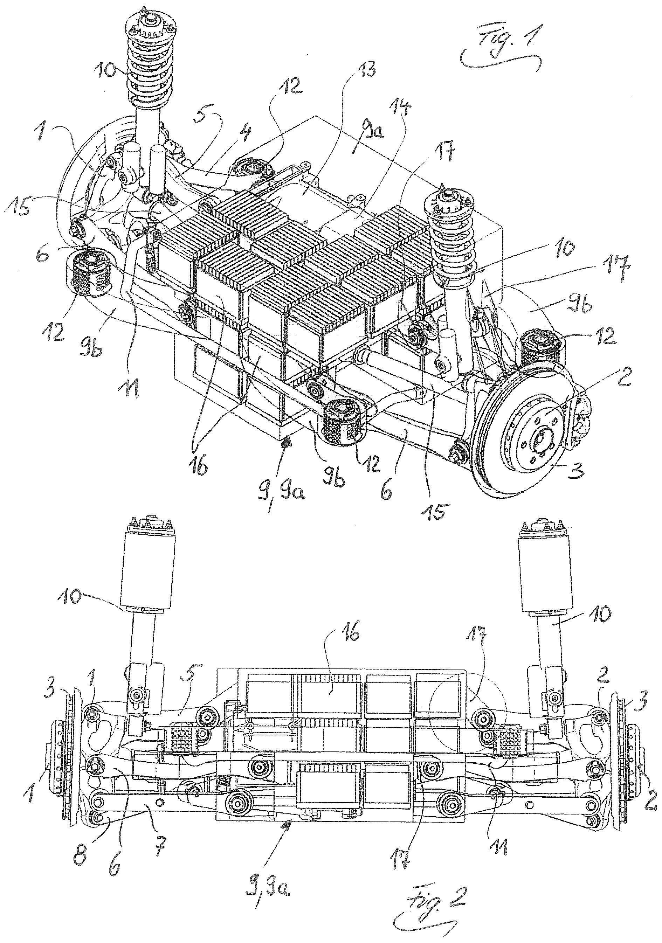

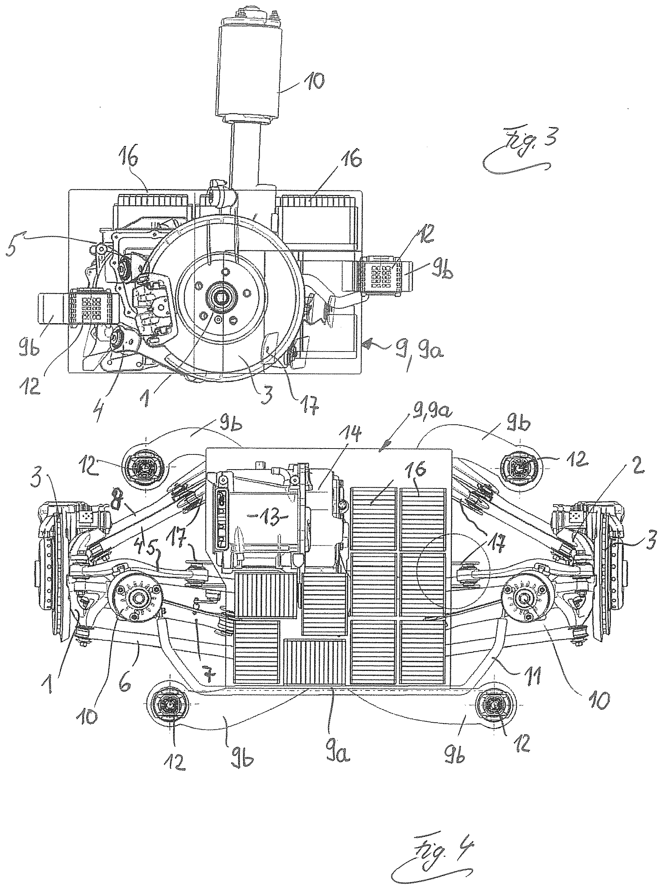

Am Grundkörper 9a des Achsträgers 9 ist ein Elektromotor 13 befestigt bzw. es kann dieser Elektromotor 13 mit einem an dessen Abtriebseite angeflanschten Verteilergetriebe 14 mit Differential teilweise oder vollständig innerhalb des Gehäuses des Achsträger-Grundkörpers 9a angeordnet sein. Vom in den Figuren nicht sichtbaren Ausgang des Verteilergetriebes 14 führt jeweils eine Antriebswelle 15 zu einem Radträger 1 bzw. 2 bzw. zur Nabe des von diesem getragenen Rades 1 bzw. 2. Diese Antriebswellen 15 sind nur in Fig.1 sichtbar; in den Figuren 2, 4 sind diese von Lenkern überdeckt.

Innerhalb des Grundkörper-Gehäuses 9a des Achsträgers 9 sind jedoch insbesondere die vor der Figurenbeschreibung genannten Elemente 16 zur Bereitstellung von elektrischer Energie für den Elektromotor 13 angeordnet. Diese sind damit vor schädlichen Umgebungseinflüssen geschützt und es kann eine solche Achse wie bereits geschildert eine vorteilhafte Vormontage-Einheit bilden. Ein weiterer Vorteil einer solchen Achse besteht in der durch den als Gehäuse gestalteten Grundkörper 9a mit den darin angeordneten besagten Elementen 16, dem Elektromotor 13 und dem Verteilergetriebe 14 gebildeten, großen akustischen Sperrmasse. Diese bewirkt, dass über die Gummilager 12 nur wenige störende Schwingungen in den auf dem Achsträger 9 abgestützten Fahrzeug-Aufbau gelangen können.

## Patentansprüche

1. Elektrisch angetriebene Achse eines zweispurigen Fahrzeugs mit den Rädern (1, 2) zugeordneten Antriebswellen (15) und einem Achsträger (9) mit mehreren daran befestigten radführenden Lenkern (4 - 8), der weiterhin zumindest einen Elektromotor (13) trägt, wobei ein Gehäuse (9a) am Achsträger (9) befestigt ist oder einen Bestandteil des Achsträgers (9) in Form eines Grundkörpers (9a) bildet, in welchem Akkumulatoren sowie eine diesen zugeordnete Leistungselektronik als Elemente (16) zur Bereitstellung elektrischer Energie für den Elektromotor (13) in diesem Gehäuse (9a) angeordnet sind, **dadurch gekennzeichnet, dass** zumindest einer der radführenden Lenker (4 - 8) am besagten Grundkörper (9a) oder Gehäuse (9a) angelenkt ist.

2. Achse nach Anspruch 1, **dadurch gekennzeichnet, dass** jedem Rad ein Elektromotor zugeordnet ist.

3. Achse nach Anspruch 1, **dadurch gekennzeichnet, dass** ein einziger Elektromotor (13) mit nachgeschaltetem Verteilergetriebe (14) oder Differential die beiden Antriebswellen (15) antreibt.

4. Achse nach einem der vorangegangenen Ansprüche, **dadurch gekennzeichnet, dass** vom Grundkörper (9a) des Achsträgers (9) Arme (9b) abgehen, auf deren Endbereichen der Fahrzeug-Aufbau über Gummilager (12) abgestützt ist

5. Achse nach einem der vorangegangenen Ansprüche, **dadurch gekennzeichnet, dass** der der Fahrbahn zugewandte Unterboden des Grundkörpers (9a) oder Gehäuses (9a) im wesentlichen eben ist.

## Claims

1. An electrically driven axle of a two-track vehicle with driveshafts (15) assigned to the wheels (1, 2) and with an axle carrier (9) comprising a plurality of wheel-guiding links (4-8) secured to the axle carrier, which also carries at least one electric motor (13), wherein a housing (9a) is secured to the axle carrier (9) or forms part of the axle carrier (9) in the form of a main body (9a), in which accumulators and power electronics assigned thereto are arranged as elements (16) for providing electrical energy for the electric motor (13) in this housing (9a), **characterised in that** at least one of the wheel-guiding links (4-8) is articulated to said main body (9a) or housing (9a).

2. An axle according to claim 1, **characterised in that** an electric motor is assigned to each wheel.

3. An axle according to claim 1, **characterised in that** a single electric motor (13) with downstream transfer case (14) or differential drives the two driveshafts (15).

4. An axle according to any one of the preceding claims, **characterised in that** arms (9b) protrude from the main body (9a) of the axle carrier (9), and the vehicle body is supported on the end regions of said arms by means of rubber bearings (12).

5. An axle according to any one of the preceding claims, **characterised in that** the underbody of the main body (9a) or housing (9a) facing the carriageway is substantially flat.

## Revendications

1. Essieu à entraînement électrique d'un véhicule à deux lignes de roues comprenant des arbres d'entraînement (15) associés aux roues (1, 2) et un porte-essieu (9) sur lequel sont fixés plusieurs bras oscillants de guidage de roue (4, 8) fixées sur celui-ci qui porte en outre au moins un moteur électrique (13),
un carter (9a) étant fixé au support d'essieu (9) ou constituant un élément du support d'essieu (9) sous la forme d'un corps de base (9a) dans lequel sont montés des accumulateurs ainsi qu'une électronique de puissance associée à ces accumulateurs constituant des éléments (16) permettant de fournir de l'énergie électrique pour le moteur électrique (13),
**caractérisé en ce qu'**
au moins l'un des bras oscillants de guidage de roue (4, 8) est fixé sur le corps de base (9a) ou sur le carter (9a).

2. Essieu conforme à la revendication 1,
**caractérisé en ce qu'**
un moteur électrique est associé à chaque roue.

3. Essieu conforme à la revendication 1,
**caractérisé en ce qu'**
un moteur électrique unique (13) en aval duquel sont montés des engrenages distributeurs (14) ou des différentiels entraîne les deux arbres d'entraînement (15).

4. Essieu conforme à l'une des revendications précédentes,
**caractérisé en ce qu'**
à partir du corps de base (9a) du porte-essieu (9) s'étendent des bras (9b) sur les zones d'extrémité desquels s'appuie la carrosserie du véhicule par l'intermédiaire de paliers en caoutchouc (12).

5. Essieu conforme à l'une des revendications précédentes,
**caractérisé en ce que**
le dessous du corps de base (9a) ou du carter (9a) tourné vers la voie de circulation est essentiellement plat.
